**Europäisches Patentamt**

**European Patent Office**

**Office européen des brevets**

(19)

(11) Veröffentlichungsnummer: **0 048 855**
**A2**

(12) **EUROPÄISCHE PATENTANMELDUNG**

(21) Anmeldenummer: **81107144.8**

(51) Int. Cl.³: **G 02 B 7/26**

(22) Anmeldetag: **10.09.81**

(30) Priorität: **29.09.80 DE 3036618**

(71) Anmelder: **SIEMENS AKTIENGESELLSCHAFT Berlin und München, Postfach 22 02 61, D-8000 München 22 (DE)**

(43) Veröffentlichungstag der Anmeldung: **07.04.82 Patentblatt 82/14**

(72) Erfinder: **Klement, Ekkehard, Dr. rer.nat., Dipl.-Phys., Siegrunestrasse 1, D-8000 München 19 (DE)**
Erfinder: **Schöner, Gerhard, Kosegartenplatz 5, D-8000 München 83 (DE)**
Erfinder: **Schiffner, Gerhard, Dr. Dipl.-Ing., Mozartstrasse 56, D-8012 Ottobrunn (DE)**

(84) Benannte Vertragsstaaten: **FR GB**

(54) Steuerelement zum Steuern einer Lichtübertragung zwischen Lichtwellenleitern.

㊐ Es wird ein optisches Steuerelement beschrieben zum Steuern einer Lichtübertragung zwischen einem zu- und einem fortführenden Lichtwellenleiter, bei dem die Lichtübertragung über eine Mehrkernfaser gesteuert wird. Die Mehrkernfaser wird zum Steuern bewegt.

EP 0 048 855 A2

SIEMENS AKTIENGESELLSCHAFT
Berlin und München

Unser Zeichen
VPA
80 P 7 1 5 1 E

Steuerelement zum Steuern einer Lichtübertragung zwischen Lichtwellenleitern

Die vorliegende Erfindung bezieht sich auf ein optisches Steuerelement zum Steuern einer Lichtübertragung zwischen zu- und fortführenden Lichtwellenleitern.

Unter optischen Steuerelementen der eingangs genannten Art sind Elemente zu verstehen, mit denen eine Lichtübertragung zwischen zu- und fortführenden Lichtwellenleitern kontinuierlich oder diskontinuierlich gesteuert werden kann. Insbesondere ist darunter ein Schalter zu verstehen, mit dem eine lichtleitende Verbindung zwischen einem zuführenden Lichtwellenleiter und einem fortführenden Lichtwellenleiter wahlweise unterbrochen oder hergestellt werden kann. Derartige Schalter sind für Glasfaserlichtwellenleiter beispielsweise so realisiert worden, daß einer der beiden sich gegenüberliegenden und fluchtenden Endabschnitte der beiden zu verbindenden Fasern mittels einer geeigneten Vorrichtung bewegt werden kann. Die Stirnflächen der beiden fluchtenden Endabschnitte weisen einen so geringen Abstand voneinander auf, daß Licht zwischen ihnen überkoppeln kann und so eine lichtleitende Verbindung zwischen den Fasern gegeben ist. Soll die Verbindung unterbrochen werden, wird der betreffende Endabschnitt seitlich herausgebogen, so daß die Stirnflächen sich nicht mehr gegenüberliegen.

Ein derartiger Schalter ist auch bereits als Umschalter realisiert worden. Der bewegliche Endabschnitt wird in diesem Fall zwischen zwei Fasern hin und herbewegt, so daß der bewegliche Endabschnitt wahlweise mit der einen oder anderen Faser verbunden werden kann.

Ed 1 Sti/13.8.80

0048855

Es ist auch schon vorgeschlagen worden, ein derartiges Schaltelement als kontinuierlichen Schalter auszubilden, so daß die Lichtübertragung zwischen den Lichtwellenleitern kontinuierlich gesteuert werden kann, ähnlich wie bei einem Dimmer. Dazu muß die Vorrichtung zum Bewegen des Endabschnitts so präzise arbeiten, daß eine Feineinstellung des relativen Versatzes der beiden sich gegenüberliegenden Stirnflächen im Bereich des Lichtwellenleiterdurchmessers möglich ist. Durch allmähliches seitliches Verschieben der sich gegenüberliegenden Stirnflächen relativ zueinander kann die Lichtübertragung allmählich gedrosselt werden und wird schließlich unterbrochen, wenn sich keine Stirnflächenteile mehr gegenüberliegen. Umgekehrt kann die Lichtübertragung bei sich gegenüberliegenden Stirnflächen gesteigert werden.

Die soeben beschriebenen kontinuierlich oder diskontinuierlich arbeitenden Schalter sind für Multimode-Glasfaserlichtwellenleiter geeignet. Aber bei Anwendung dieses Prinzips auf Monomode-Lichtwellenleiter treten erhebliche Justierprobleme auf. Ein aus einer Kern-Mantel-Glasfaser bestehender Monomode-Lichtwellenleiter weist beispielsweise einen Kerndurchmesser im Mikrometerbereich, beispielsweise unter 5 µm, auf und muß daher mindestens mit dieser Genauigkeit einjustiert werden. Bei Realisierung eines kontinuierlich gesteuerten Schalters läge der zulässige Versatz noch um mindestens eine Größenordnung niedriger. Es ist daher leicht einzusehen, daß die Anwendung des in Rede stehenden Prinzips zur Herstellung eines dauerhaft und zuverlässig arbeitenden Monomodeschalters zu nicht unerheblichen Problemen führt.

Es ist die Aufgabe der vorliegenden Erfindung, ein Steuerelement der eingangs genannten Art zu schaffen, welches problemlos auch bei Monomode-Wellenleitern eingesetzt werden kann, und auch da dauerhaft und zuverlässig arbeitet.

0048855

Diese Aufgabe wird durch die im kennzeichnenden Teil des Patentanspruchs 1 angegebenen Merkmale gelöst.

Mit dieser Lösung ist ein Element geschaffen worden, welches eine Reihe von erheblichen Vorteilen aufweist. Es kann fest mit dem zu- und fortführenden Lichtwellenleitern verbunden werden und es ist daher nur eine einmalige Justierung erforderlich. Danach arbeitet das Element dauerhaft und zuverlässig. Es ist sowohl als diskontinuierlich als auch als kontinuierlich arbeitendes Schaltelement verwendbar. Ein ganz besonderer Vorteil liegt darin, daß für ein gewünschtes Schaltverhalten eine ganze Reihe von Parametern ausgenützt werden können, als da insbesondere sind: der Abstand zwischen den nebeneinander verlaufenden Kernen, deren Länge sowie verschiedenste Möglichkeiten, die das Überkoppeln von Licht zwischen den Kernen beeinflussen. Durch diese breite Palette von Möglichkeiten ist ein universelles Element zum Steuern einer Lichtübertragung zwischen zu- und fortführenden Lichtwellenleitern geschaffen worden.

In einer besonders vorteilhaften Ausführungsform verzweigt sich die Mehrkernfaser endseitig, wobei in jedem Zweig ein Kern enthalten ist. Eine derartig sich verzweigende Faser kann hergestellt werden und weist den Vorteil auf, daß das Ankoppeln der Lichtwellenleiter erheblich vereinfacht wird. Das Ankoppeln kann beispielsweise über zentrierte Faserstecker erfolgen. Diese Verbindung ist dann lösbar.

Insbesondere bei Monomode-Glasfaserlichtwellenleitern ist die Kopplung vorteilhafterweise jedoch so ausgebildet, daß ein Zweigende mit einem Glasfaserlichtwellenleiter fest verbunden ist. Die feste Verbindung kann mit optischem Kitt hergestellt werden, jeodch ist es besonders zweckmäßig, das Zweigende mit dem Glasfaserlichtwellenleiter zu verschweißen. Eine solche Verbindung ist dauerhaft und kann sehr einfach und
präzise hergestellt werden.

In einer besonders bevorzugten Ausführungsform ist die
das Überkoppeln von Licht zwischen den Kernen beeinflussende Einrichtung als Einrichtung zum elastischen
Deformieren der Mehrkernfaser ausgebildet. Wenn der
Abstand zwischen den Kernen der Mehrkernfaser richtig
gewählt wird, läßt sich der Grad der Überkopplung
durch elastische Deformationen, insbesondere durch ein
Verbiegen der Mehrkernfaser bekannterweise in weiten
Bereichen reversibel verändern. Es läßt sich damit sowohl
ein kontinuierliches als auch diskontinuierliches Schaltelement bilden. In diesem Zustand werden die betreffenden
Zweigenden mit den Glasfasern verschweißt.

Somit ist eine bevorzugte Ausführungsform eines vorgeschlagenen Steuerelementes mit Einrichtung zum elastischen Deformieren so ausgebildet, daß die Einrichtung
zum elastischen Deformieren die Mehrkernfaser mehr oder
weniger stark verbiegt.

Eine andere vorteilhafte und bevorzugt verwendete Ausführungsform eines vorgeschlagenen Steuerelements
mit Einrichtung zum elastischen Deformieren ist dagegen
so ausgebildet, daß die Einrichtung zum elastischen Deformieren eine Schallquelle umfaßt. Die Druckschwankungen
in den Schallschwingungen deformieren die Mehrkernfaser
wodurch ebenfalls die Kopplung zwischen den Kernen verändert werden kann.

Zweckmäßig ist es, wenn die Mehrkernfasern mit einem
elastischen Material umhüllt ist, auf das die Einrichtung zum Deformieren einwirkt. Besonders bevorzugte Anwendungen des vorgeschlagenen Steuerelements sind seine
Anwendung als Schalter zum Herstellen oder Unterbrechen
einer lichtleitenden Verbindung zwischen zu- und fortführenden Lichtwellenleitern und auch seine Anwendung
als Umschalter zu m Umschalten einer lichtleitenden
Verbindung zwischen einem Paar Lichtwellenleiter auf
ein anderes Paar Lichtwellenleiter.

Es sei darauf hingewiesen, daß das vorgeschlagene Steuerelement nicht nur für Monomode-Lichtwellenleiter geeignet ist, sondern auch für
Multimode-Lichtwellenleiter. Es ist lediglich der Durchmesser der Kerne in der Mehrkernfaser dem eines Monomode-
bzw. Multimode-Lichtwellenleiters entsprechend zu wählen.

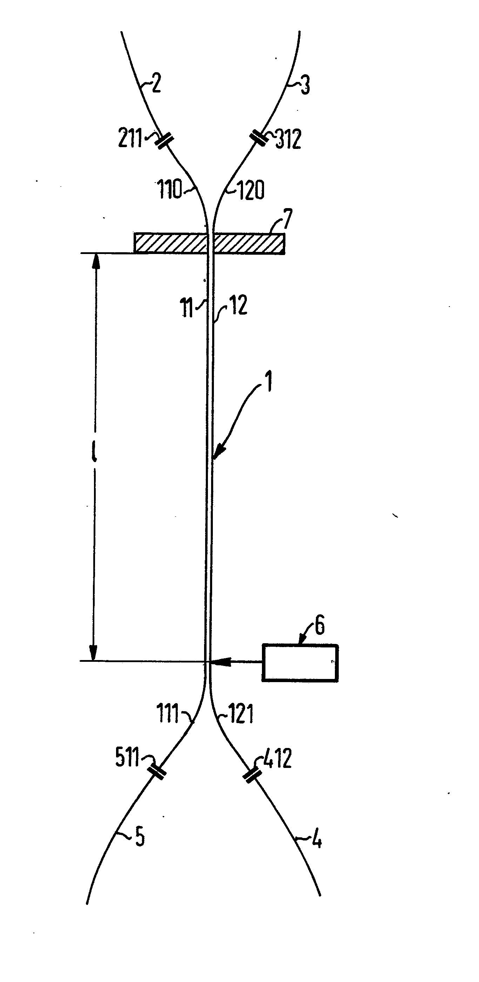

Ein Ausführungsbeispiel der Erfindung ist in der Figur
schematisch dargestellt und wird in der folgenden Beschreibung näher erläutert.

Die Figur zeigt einen Schalter für Monomode-Glasfaserlichtwellenleiter.

Der in der Figur dargestellte Schalter umfaßt die an
beiden Enden sich verzweigende Mehrkernfaser 1 mit den
beiden nebeneinander verlaufenden Kernen 11 und 12, die
von einem nicht dargestellten, gemeinsamen Mantel aus
einem Glas geringeren Brechungsindexes umgeben sind.

Eine solche Mehrkernfaser kann aus einer stabförmigen
Vorform gezogen werden, die anstelle von nur einem Kern
zwei oder mehrere Kerne enthält.

Bei der Herstellung einer solchen Vorform kann beispielsweise von herkömmlichen kreiszylindrischen Vorformen
mit einem einzigen, von einem Mantel umgebenen Kern ausgegangen werden. In den Mantel einer jeden von zwei solchen Vorformen wird eine achsparallele ebene Fläche geschliffen, die aber noch einen gewissen Abstand vom axialen
Kern aufweist.

0048855

Die beiden derart präparierten Vorformen werden so zusammengebracht, daß die ebenen Flächen aufeinander
liegen und dann durch endseitiges Verschmelzen fixiert,
Aus der so erhaltenen Doppelkernvorform wird
die Doppelkernfaser          wie eine Einkernfaser
aus einer Einkernvorform gezogen.

Bei Ziehen der Faser verkleinern sich alle Querabmessungen der Vorform, wie Durchmesser und Kerndurchmesser
als auch der Abstand zwischen den Kernen im wesentlichen
um denselben Faktor. Dementsprechend kann der gewünschte
Kernabstand in der Doppelkernfaser durch richtige Wahl
des Kernabstandes in der Vorform sehr genau vorausbestimmt werden.

Zur Herstellung der endseitigen Verzweigungen ist schon
vorgeschlagen worden (siehe ältere Patentanmeldung
P30 16 705.6  ; VPA 80 P 7053), in der Doppelkernvorform Querdurchgänge vorzusehen, die quer zur Achse
der Vorform    zwischen den Kernen und mit Abstand
von ihnen verlaufen. Diese Querdurchgänge verschließen
sich beim Ziehen nicht und werden in die Länge gezogen.
Die entstehende Doppelkernfaser weist dann entsprechende
Queröffnungen auf, die beidseitig von je einem Kern
umgangen wird.

Durchtrennt man die Faser im Bereich solcher Queröffnungen, so erhält man eine endseitig sich verzweigende
Doppelkernfaser, wie sie in der Figur schematisch dargestellt und mit 1 bezeichnet ist. Die vier Zweige enthalten je einen Kern 110, 120, 111 und 121, von denen
jeder in einen der nebeneinander verlaufenden Kerne
11, 12 übergeht und die an den Stellen 211, 312, 412
bzw. 511 enden, an denen die Durchtrennungen in den
Queröffnungen der Doppelkernfaser erfolgt ist.

0048855

Der Durchmesser der Kerne der Doppelkernfaser liegt
entsprechend einer Monomodefaser im Mikrometerbereich. Entsprechendes gilt vorzugsweise auch für den Abstand zwischen den Kernen 11 und
12.

Die Enden 211, 312, 412 und 511 sind mit je einer
Monomodefaser 2, 3, 4 bzw. 5, die ebenfalls eine
Kern-Mantel-Glasfaser ist, fluchtend verbunden.

Wegen des geringen, im Mikrometerbereich liegenden
Kerndurchmessers müßte eine Steckverbindung eine
einmal durchgeführte entsprechend genaue Justierung
auf Dauer einhalten. Die damit verbundenen Schwierigkeiten können umgangen werden, wenn man die
Faser mit den Zweigen fest verbindet, beispielsweise
verschweißt oder verschmilzt, nachdem die Justierung
durchgeführt worden ist.

Die Justierung erfolgt beispielsweise auf einem Justiertisch, auf dem die Enden der Faserkerne in ausreichender Feineinstellung zur Flucht gebracht werden können.
Die Justierung kann dann durch ein Mikroskop überwacht
werden und die Einstellung erfolgt so lange, bis ein
durch die beiden Fasern hindurchgegangenes Lichtsignal
maximal ist. In diesem Zustand werden die Faserenden
miteinander verschmolzen.

Die feste Verbindung kann auch mittels optischem Kitt
hergestellt werden.

Eine Lichtübertragung, beispielsweise zwischen den
Fasern 2 und 4 kann dadurch gesteuert werden, daß die
Lichtüberkopplung zwischen den nebeneinander verlaufenden Kernen 11 und 12 beeinflußt wird. Dies kann, wie
schon angedeutet, auf die verschiedensten Weisen durchgeführt werden. Jedenfalls ist eine Einrichtung 6 erforderlich, die das Überkoppeln von Licht zwischen den
Kernen 11 und 12 beeinflußt.

Eine solche Einrichtung 6 ist vorzugsweise so ausgebildet, daß sie die Mehrkernfaser 1 elastisch deformiert.
Eine solche elastische Deformation kann darin bestehen,
daß die Mehrkernfaser verbogen und/oder vorzugsweise in
Querrichtung zusammengedrückt wird.

Beim Verbiegen der Faser wird einer der Kerne 11, 12
gestaucht und der andere gedehnt und damit der Kopplungsgrad zwischen den Kernen verändert. Wenn beispielsweise
die Kerne einen Abstand voneinander aufweisen, der so
bemessen ist, daß vor dem Verbiegen keine merkliche
Überkopplung auftritt, so kann durch das Verbiegen,
das vorzugsweise in einer beide Kerne durchstoßenden
Richtung erfolgt, die Überkopplung erheblich erhöht
werden und damit beispielsweise zwischen den vor der
Verbiegung getrennten Fasern 2 und 4 oder 3 und 5 eine
lichtleitende Verbindung hergestellt werden. Diese Verbindung kann wieder unterbrochen werden, indem die
Verbiegung rückgängig gemacht wird. Dadurch kann das
Steuerelement als ein Schaltelement verwendet werden,
mit welchem eine lihtleitende Verbindung zwischen
zwei Fasern 2 und 4 bzw. 3 und 5 wahlweise herstellbar
oder unterbrechbar ist. Der Grad der Überkopplung kann
auch durch den Grad der Verbiegung gesteuert werden,
so daß das Schaltelement auch kontinuierlich steuerbar ist, ähnlich einem Dimmer.

Eine Einrichtung 6 zum Verbiegen der Faser ist zweckmäßigerweise elektromagnetisch** ausgebildet. Die Mehrkernfaser wird beispielsweise mit einem beweglichen
Anker eines steuerbaren Elektromagneten verbunden.

** piezoelektrisch, oder mit Bimetall

Der quer zur Mehrkernfaser bewegliche Anker verbiegt
die Faser mehr oder weniger stark.

Eine Einrichtung 6 zum elastischen Deformieren der
Mehrkernfaser kann auch so ausgebildet sein, daß sie
die Faser vorzugsweise in Querrichtung mehr oder weniger
stark zusammendrückt. Wird die Faser in einer Richtung
zusammengedrückt, welche die beiden Kerne durchstößt,
wird der Abstand zwischen den Kernen verkleinert,
wodurch der Grad der Überkopplung zwischen den Kernen
vergrößert wird. Wird die Faser dagegen in einer zur
genannten Richtung senkrechten Richtung zusammengedrückt, kann der Abstand zwischen den Kernen vergrößert
und damit der Kopplungsgrad verkleinert werden.

Auch Druckschwankungen, wie sie beispielsweise in
Schallwellen auftreten, können zum Steuern verwendet
werden. Eine Erhöhung eines die Mehrkernfaser umgebenden
Druckes bewirkt dabei eine Erhöhung des Kopplungsgrades.
Eine bevorzugte Einrichtung 6 zum elastischen Deformieren
der Mehrkernfaser umfaßt demnach auch eine Schallquelle,
vorzugsweise eine Ultraschallquelle.

Es ist günstig, wenn die elatische Deformation über
einer möglichst großen Strecke der Mehrkernfaser
beispielsweise über ihre ganze Länge auf diese einwirkt.
Durch die Länge dieser Strecke kann bestimmt werden,
wie viel Licht vom einen Kern zum anderen überkoppelt.

Wie schon erwähnt, kann das in der Figur dargestellte
Steuerelement als Schalter verwendet werden, wenn der
Abstand zwischen den Kernen 11 und 12 so gewählt ist,
daß ohne eine elatische Deformation durch die Einrichtung 6 keine merkliche Überkopplung zwischen den
Kernen 11 und 12 auftritt. Ohne eine auf die Faser 1
ausgeübte Deformation besteht dann keine lichtleitende
Verbindung zwischen den Fasern 2 und 4 und auch keine
zwischen den Fasern 3 und 5. Wird die Faser 1 dagegen
elastisch deformiert, so koppelt Licht zwischen den
Kernen 11 und 12 über, so daß nunmehr eine lichtleitende Verbindung zwischen den Fasern 2 und 4, aber auch
zwischen den Fasern 3 und 5 besteht. Wird die Deformation wieder rückgängig gemacht, so wird die lichtleitende Verbindung zwischen den genannten Faserpaaren
wieder unterbrochen . Auf diese Weise stellt das in
der Figur dargestellte Steuerelement einen Schalter
zum Herstellen oder Unterbrechen einer lichtleitenden
Verbindung zwischen den Fasern 2 und 4 und/oder den
Fasern 3 und 5 dar.

Da der Grad der Überkopplung zwischen den Kernen 11
und 12 insbesondere durch die Wahl der Länge der besagten Strecke so beeinflußbar ist, daß der größte
Teil des in einem Kern geführten Lichts auf den
anderen überkoppelt und damit in dem einen Kern
höchstens noch ein unwesentlicher Lichtanteil geführt wird, kann das in der Figur dargestellte Steuerelement auch als diskontinuierlicher oder kontinuierlicher Umschalter verwendet werden. Licht, das beispielsweise über die Faser 2 oder die Faser 3 zugeführt wird, tritt in die Faser 5 bzw. 4 ein, wenn
keine Überkopplung zwischen den Kernen 11 und 12
stattfindet, dagegen aber in die Faser 4  bzw. 5 ein,
wenn der größte Teil des in einem Kern geführten
Lichts in den anderen Kern überkoppelt. Somit kann
wahlweise eine lichtleitende Verbindung zwischen der Faser 2 und den Fasern 5 oder 4 hergestellt werden. Analog kann wahlweise eine Verbindung zwischen der Faser und der Faser 4 oder 5 hergestellt werden. Für die Faser 5 und die Fasern 2 und 3 bzw. die Faser 4 und die Fasern 2 und 3 gilt dasselbe.

Eine Zweikernfaser, wie sie in der Figur dargestellt ist, ist ein Viertor mit den Toren 211, 312, 412, 511. In dem dargestellten Beispiel sind alle Tore ausgenutzt. Für den Fall, daß nicht alle vier Tore ausgenutzt werden, beispielsweise bei Verwendung des Elements als einfacher Schalter oder einfacher Umschalter, werden die nicht benutzten Tore zweckmäßigerweise durch Lichtabsorber verschlossen, so daß über diese nicht benutzten Tore kein Störlicht von außen eindringen kann und über die Kerne 11 oder 12 zugeführtes Licht unschädlich gemacht wird.

Als Beispiel wurde ein mit einer Doppelkernfaser 1 aufgebauter Umschalter durchgerechnet. Für die Berechnung wurde folgendes zugrunde gelegt: Der Abstand zwischen den Kernen 11 und 12 der Doppelkernfaser 1 beträgt etwa 15 $\mu$m, der Durchmesser der Kerne etwa 3 $\mu$m. Die Brechzahldifferenz $n_K - n_M$ zwischen der Brechzahl $n_K$ eines Kernes 11, 12 und der Brechzahl $n_M$ des gemeinsamen Mantels beträgt etwa $1,58 \cdot 10^{-3}$. Die Länge der Kerne 11, 12 betrug etwa 11,4 mm, was gleichbedeutend ist, daß die Koppellänge 1 der Doppelkernfaser 1 11,4 mm beträgt. Die Doppelkernfaser 1 ist an einem Ende von einem Faserhalter 7 (siehe Figur) gehalten. Die Einrichtung 6 zum Verbiegen der Faser 1 greift an ihrem anderen Ende an, so wie es in der Figur dargestellt ist. Für die Berechnung wurde weiter angenommen, daß der Biegeradius über der Koppellänge 1 konstant ist. Unter diesen Voraussetzungen ergab die Berechnung, daß bei einer Wellenlänge von etwa 633 nm im wesentlichen die gesamte in einem Kern geführte Lichtleistung in den anderen Kern übergekoppelt wird, wenn die Faser 1 unverbogen ist, d.h. geradlinig verläuft. Keine Lichtleistung wird dagegen von einem Kern zum anderen übergekoppelt, wenn die Faser 1 durch die Einrichtung 6 um etwa 185 $\mu$m ausgelenkt wird. Diese Auslenkung entspricht einem Biegeradius von etwa 0,35 m. Bei einer Wellenlänge von 633 nm ist somit zum Umschalten ein Biegeradius von mindestens 0,35 m erforderlich.

8 Patentansprüche
1 Figur

**0048855**

80 P 7151 E
Patentansprüche

1. Optisches Steuerelement zum Steuern einer Lichtübertragung zwischen Lichtwellenleitern, g e - k e n n z e i c h n e t . d u r c h   eine zwischen den Lichtwellenleitern anzuordnende Mehrkernfaser (1), mit mindestens zwei Kernen (11, 12), bei der jeder der Lichtwellenleiter (2 bis 5) an ein Ende (211, 312, 412, 511) eines der beiden Kerne (11, 12) anzukopppeln ist, und durch eine das Überkoppeln von Licht zwischen den Kernen (11, 12) beeinflussende Einrichtung (6).

2. Element nach Anspruch 1, d a d u r c h   g e - k e n n z e i c h n e t ,   daß die Mehrkernfaser (1) sich endseitig verzweigt, wobei in jedem Zweig ein Kern (110, 120, 121, 111) enthalten ist.

3. Element nach Anspruch 2, d a d u r c h   g e - k e n n z e i c h n e t ,   daß mit einem Ende (211, 312, 412 bzw. 511) eines Zweiges einer der Lichtwellenleiter (2 bis 5) fest verbunden ist.

4. Element nach einem der vorhergehenden Ansprüche, d a d u r c h   g e k e n n z e i c h n e t ,   daß die das Überkoppeln beeinflussende Einrichtung (6) die Mehrkernfaser (1) elastisch deformiert.

5. Element nach Anspruch 4, d a d u r c h   g e - k e n n z e i c h n e t ,   daß die Einrichtung (6) zum elastischen Deformieren der Mehrkernfaser (1) diese mehr oder weniger stark verbiegt.

6. Element nach Anspruch 4 oder 5, d a d u r c h   g e k e n n z e i c h n e t ,   daß die Einrichtung (6) zum elastischen Deformieren der Mehrkernfaser (1) eine Schallquelle umfaßt.

7. Anwendung eines Elements nach einem der vorhergehenden Ansprüche als Schaltelement zum Herstellen oder Unterbrechen einer lichtleitenden Verbindung zwischen zu- und fortführenden Lichtwellenleitern.

8. Anwendung eines Elements nach Anspruch 7 als Umschalter (bzw. Kommutator) zum Umschalten einer lichtleitenden Verbindung zwischen einem Lichtwellenleiterpaar von einem Paar auf ein anderes Paar.